# DEMANDE DE BREVET EUROPEEN

(11) **EP 1 826 037 A1**
(43) Date de publication de la demande: **29.08.2007**
(21) Numéro de dépôt: 06300172.1
(22) Date de dépôt: 28.02.2006
(51) Int. Cl.: B60G 17/019, B60W 40/06, B60T 8/172

(54) **Organe de mesure et procédé d'estimation de la pente pour un véhicule.**

(71) Demandeur: Delphi Technologies, Inc., Troy, MI 48007 (US)
(72) Inventeur: LEMAIRE, Jean-Christophe, 92300, LEVALLOIS-PERRET (FR); LOCHE, Jacques, 92600, ASNIERES (FR)
(74) Mandataire: Laget, Jean-Loup

(57) **Abrégé**

Véhicule automobile (1) comprenant au moins un support de roue portant une roue (4), un châssis (5) mobile par rapport audit support de roue, un capteur de vitesse (6) fixe par rapport audit support de roue et apte à émettre un signal de vitesse représentatif de la vitesse de rotation de ladite roue, et un capteur d'accélération (7) apte à émettre un signal d'accélération représentatif d'une accélération subie par ledit capteur d'accélération, ledit capteur d'accélération étant fixe par rapport audit support de roue.

## Description

La présente invention se rapporte à un véhicule automobile équipé pour pouvoir estimer la pente et/ou l'état défoncé d'une surface sur laquelle se trouve le véhicule. La présente invention se rapporte également à un organe de mesure pour équiper le véhicule.

Dans un véhicule automobile, on cherche à assurer des fonctions de confort, par exemple un freinage jusqu'à l'arrêt sans à-coup, pour lesquelles il est nécessaire de connaître la pente de la surface sur laquelle le véhicule est garé, démarre ou s'arrête. Typiquement, les couples de freinage et/ou la puissance motrice à appliquer sont calculés en fonction de la pente.

Le document FR 2 857 925 décrit un procédé d'estimation de la pente et un véhicule équipé pour mettre en oeuvre ce procédé selon l'art antérieur. Le véhicule comprend un capteur d'accélération agencé dans le châssis du véhicule de manière à mesurer une accélération dans la direction longitudinale du châssis. L'accélération mesurée comprend une composante due à l'accélération du véhicule, et une composante due à la gravité, cette dernière étant d'autant plus grande que la pente est importante. La pente est calculée en fonction de l'accélération mesurée par le capteur d'accélération et de l'accélération longitudinale du véhicule, déterminée en fonction de la vitesse de rotation des roues. En soustrayant de l'accélération mesurée l'accélération longitudinale du véhicule, on obtient la composante de l'accélération mesurée due à la gravité, dont on peut déduire la pente.

Dans ce véhicule, l'orientation du châssis ne correspond pas nécessairement à celle de la surface sur laquelle se trouve le véhicule, en raison notamment du tangage et de la répartition de la charge, c'est-à-dire la masse des passagers et des bagages. La mesure de l'accélération, et donc le calcul de la pente, s'en trouve perturbé. De plus, ce procédé permet uniquement d'estimer la pente de la surface sur laquelle se trouve le véhicule, et non d'autres paramètres.

L'invention à pour but de fournir un véhicule automobile qui ne présente pas au moins certains des inconvénients précités de l'art antérieur.

Pour cela, l'invention fournit un véhicule automobile comprenant au moins un support de roue portant une roue, un châssis mobile par rapport audit support de roue, un capteur de vitesse fixe par rapport audit support de roue et apte à émettre un signal de vitesse représentatif de la vitesse de rotation de ladite roue, et un capteur d'accélération apte à émettre un signal d'accélération représentatif d'une accélération subie par ledit capteur d'accélération, caractérisé par le fait que ledit capteur d'accélération est fixe par rapport audit support de roue.

Grâce à ces caractéristiques, l'accélération mesurée par le capteur d'accélération est indépendante de l'orientation du châssis. On peut donc estimer la pente de la surface sur laquelle se trouve le véhicule indépendamment de l'orientation du châssis. De plus, la mesure de l'accélération subie par le support de roue permet de déterminer d'autres paramètres, par exemple une valeur représentative de l'état défoncé de la surface.

Selon un mode de réalisation particulier, le véhicule comprend un support de fixation fixé sur ledit support de roue, ledit capteur de vitesse et ledit capteur d'accélération étant fixé sur ledit support de fixation. Ainsi, lors de l'assemblage du véhicule, il est possible de fixer le capteur de vitesse et le capteur d'accélération sur le support de roue en une simple opération, consistant à fixer le support de fixation sur le support de roue.

Selon un mode de réalisation particulier, le véhicule comprend un premier connecteur relié audit capteur de vitesse pour l'émission dudit signal de vitesse, ledit capteur d'accélération comprenant un deuxième connecteur et un troisième connecteur, ledit premier connecteur coopérant avec ledit deuxième connecteur pour fixer de manière amovible ledit capteur d'accélération audit premier connecteur, ledit capteur d'accélération étant apte à transmettre ledit signal de vitesse dudit deuxième connecteur vers ledit troisième connecteur pour l'émission dudit signal de vitesse et dudit signal d'accélération par ledit troisième connecteur. Grâce à ces caractéristiques, on peut prévoir un même capteur de vitesse qui peut être utilisé soit pour fabriquer un véhicule selon un mode de réalisation de l'invention en y associant un capteur d'accélération par coopération des connecteurs, soit pour fabriquer un véhicule selon un mode de réalisation ne faisant pas partie de l'invention, par coopération du premier connecteur avec un câble de transmission ou un autre élément, en l'absence d'un capteur d'accélération. On réalise ainsi des économies d'échelle.

De préférence ledit capteur d'accélération est un capteur d'accélération unidirectionnel, ledit signal d'accélération étant représentatif d'une accélération subie par ledit capteur d'accélération selon une direction prédéfinie. Avantageusement ledit capteur d'accélération est agencé de manière que ladite direction prédéfinie est alignée avec la direction longitudinale dudit véhicule. Ces caractéristiques sont particulièrement avantageuses pour pouvoir estimer facilement et précisément la pente de la surface sur laquelle se trouve le véhicule automobile.

Selon un mode de réalisation particulier, ledit capteur d'accélération comprend au moins une paroi et une masse élastiquement mobile par rapport à ladite paroi, ledit signal d'accélération étant un signal représentatif du déplacement de ladite masse par rapport à ladite paroi.

De préférence le véhicule comprend au moins un premier capteur de vitesse et un premier capteur d'accélération fixes par rapport à un premier support de roue, et un deuxième capteur de vitesse et un deuxième capteur d'accélération fixes par rapport à un deuxième support de roue. Grâce à ces caractéristiques, on dispose de plusieurs valeurs d'accélération mesurée et on peut estimer plusieurs valeurs de pente correspondantes ou estimer une valeur de pente en fonction d'une accélération moyenne. La comparaison de ces différentes valeurs mesurées, respectivement estimées, permet d'obtenir une confirmation.

L'invention fournit également un procédé d'estimation d'un paramètre de fonctionnement d'un véhicule automobile selon l'invention ci-dessus, comportant les étapes consistant à :
- mesurer l'accélération dudit support de roue avec ledit capteur d'accélération,
- calculer ledit paramètre de fonctionnement en fonction de ladite accélération mesurée.

De préférence, ledit paramètre de fonctionnement est la pente ou l'état défoncé d'une surface sur laquelle se trouve ledit véhicule.

L'invention fournit également un organe de mesure adapté pour un véhicule selon l'invention ci-dessus, caractérisé par le fait qu'il comprend un capteur de vitesse apte à émettre un signal de vitesse représentatif de la vitesse de rotation de ladite roue et un capteur d'accélération fixe par rapport audit capteur de vitesse et apte à émettre un signal d'accélération représentatif d'une accélération subie par ledit capteur d'accélération, ledit capteur de vitesse et ledit capteur d'accélération étant aptes à être fixés sur ledit support de roue.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés. Sur ces dessins :
- la figure 1 est une représentation schématique d'un véhicule selon un mode de réalisation de l'invention sur une surface en pente ;
- la figure 2 est une vue schématique de dessus du capteur de vitesse et du capteur d'accélération du véhicule de la figure 1 ;
- la figure 3 est une vue schématique de profile du capteur de vitesse et du capteur d'accélération de la figure 2 ;
- la figure 4 est une vue schématique de profile d'un capteur de vitesse et d'un capteur d'accélération selon une variante.

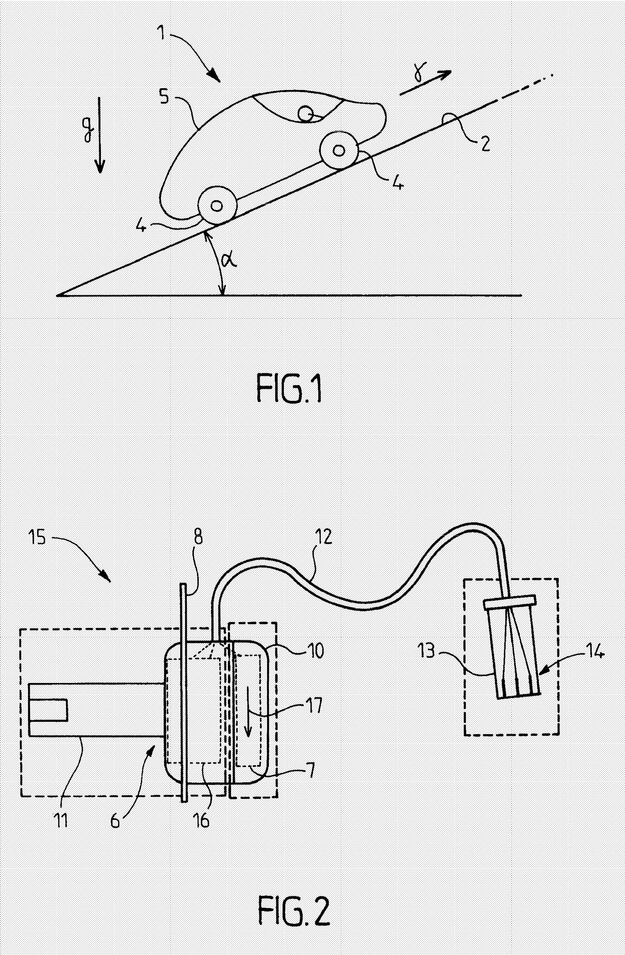

Sur la figure 1, on a représenté un véhicule 1 roulant sur une surface 2 qui a une pente définie par un angle α par rapport à l'horizontale. De manière habituelle, on mesure la pente à l'aide de la variable p = tan α, qui est exprimée en pourcentage.

Le véhicule 1 comprend quatre roues 4, dont deux sont représentées sur la figure 1. Chaque roue est portée par un support de roue ou fusée (non représenté). Le châssis 5 du véhicule 1 est monté de manière mobile sur les supports de roues par des organes de suspension.

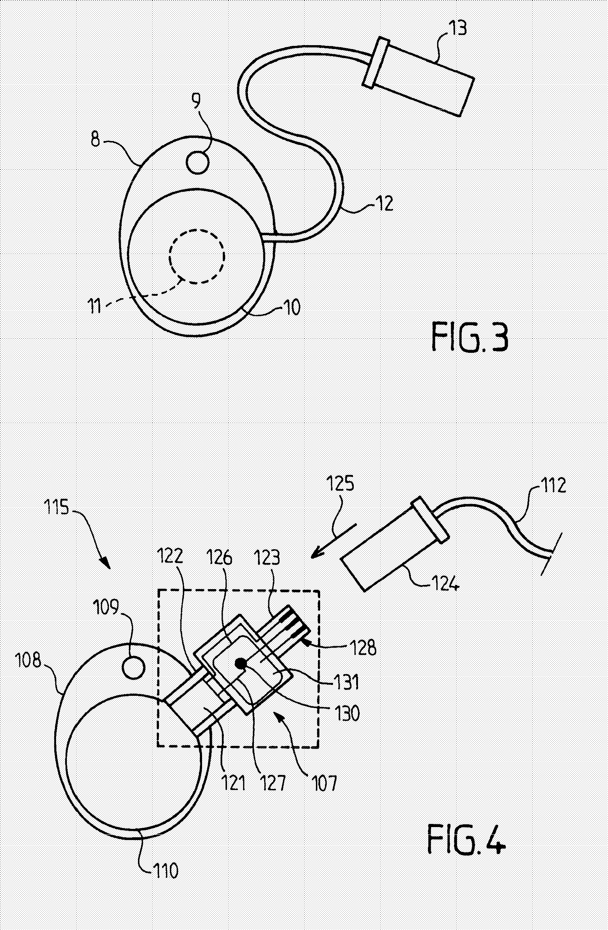

Au moins l'un des supports de roue est équipé d'un organe de mesure 15 représenté sur les figures 2 et 3. L'organe de mesure 15 comprend une plaque de support 8 percée d'un alésage 9 permettant de fixer la plaque de support 8 sur le support de roue. Un boîtier 10 est fixé sur la plaque 8.

Un capteur de vitesse 6 comprend un tube 11 faisant saillie hors du boîtier 10, et des composants électroniques 16 agencés à l'intérieur du boîtier 10. Le capteur de vitesse 6 est apte à mesurer la vitesse de rotation de la roue du support de roue associé.

Un capteur d'accélération 7 est agencé à l'intérieur du boîtier 10. Le capteur d'accélération 7 est d'un type comportant une masse suspendue 130 de manière élastique, mobile par rapport à une paroi 131 (voir la figure 4). Il s'agit d'un capteur d'accélération unidirectionnel, apte à mesurer l'accélération subie par le support de roue selon une direction représentée par la flèche 17, parallèle à la direction longitudinale du véhicule. Avec un tel capteur, lorsque le véhicule est soumis à une accélération longitudinale effective y, le signal de mesure fourni par le capteur d'accélération 7 représente l'accélération y plus une composante due à l'effet du champ de gravitation terrestre g sur la masse suspendue dans le capteur d'accélération 7. On peut en déduire la pente p de la surface 2. Alternativement, le capteur d'accélération pourrait être agencé de manière à mesurer une accélération selon une autre direction, par exemple une direction perpendiculaire à la surface 2. Cela permet dans ce cas de déterminer un état défoncé de la route avec une grande précision.

Un câble de transmission 12 s'étend du boîtier 10 à un connecteur 13. Le connecteur 13 présente trois contacts électriques 14 pour la transmission respectivement d'un signal d'alimentation vers le boîtier 10, et du signal de vitesse du capteur de vitesse 6 et du signal d'accélération du capteur d'accélération 7 à un contrôleur (non représenté) agencé dans le châssis 5 du véhicule 1.

Le contrôleur comprend des moyens de calcul aptes à estimer la pente p de la surface 2. Par exemple, le contrôleur est apte à mettre en oeuvre la méthode décrite par le document FR 2 857 925, l'accélération mesurée étant dans ce cas l'accélération mesurée par le capteur d'accélération 7. Bien entendu, d'autres méthodes d'estimation de la pente peuvent être mises en oeuvre. En complément ou alternativement, le contrôleur comprend des moyens de calcul aptes à estimer d'autres paramètres en fonction de l'accélération mesurée par le capteur d'accélération 7. Par exemple, le contrôleur est apte à calculer une valeur représentative d'un état défoncé de la route. Cette valeur est par exemple égale au maximum de l'accélération verticale des roues motrices, mesurée par le capteur d'accélération 7 agencé de manière appropriée. On peut également envisager de mesurer les accélérations longitudinales ou latérales du véhicule, utilisées dans le cadre de contrôle de trajectoire du véhicule (ABS ou ESP).

Dans le cas où plusieurs supports de roue sont chacun équipé d'un organe de mesure 15, le contrôleur calcule plusieurs valeurs de la pente p, ce qui permet, par comparaisons de différentes valeurs, d'obtenir une confirmation des résultats. Alternativement, le contrôleur calcul une valeur de la pente p en fonction d'une moyenne des accélérations mesurées. Les différents capteurs d'accélération 7 peuvent être tous agencés de manière à mesurer une accélération selon une même direction, ou être agencés différemment les uns des autres.

La figure 4 représente un organe de mesure 115 pouvant être utilisé dans le véhicule 1 à la place de l'organe de mesure 15. Les éléments identiques au similaires à des éléments de l'organe de mesure 115 sont désignés par les mêmes numéros de référence augmentés de 100 et ne sont plus décrit en détail.

Le capteur d'accélération 107 de l'organe de mesure 115 n'est pas agencé à l'intérieur du boîtier 110. Le boîtier 110 présente un premier connecteur 121 qui présente deux contacts électriques (non représentés) pour la transmission respectivement du signal d'alimentation électrique et du signal de vitesse. Le capteur d'accélération 107 présente un deuxième connecteur 122 et un troisième connecteur 123.

Le connecteur 122 coopère avec le connecteur 121 pour fixer le capteur d'accélération 107 sur le boîtier 110 et pour la transmission du signal d'accélération et du signal de vitesse. A cet effet, le capteur d'accélération 107 présente une liaison électrique interne de signal de vitesse 126 et une liaison électrique interne de signal d'alimentation, reliant le deuxième connecteur 122 au troisième connecteur 123.

Le troisième connecteur 123 présente donc trois contacts électriques 128 pour la transmission respectivement du signal d'alimentation, du signal de vitesse et du signal d'accélération. Le câble 112 présente un connecteur de câble 124 coopérant avec le connecteur 123, comme le représente la flèche 125.

On appréciera que, dans un mode de réalisation ne faisant pas partie de l'invention, le capteur d'accélération peut être omis et le connecteur de câble 124 peut coopérer directement avec le premier connecteur 121.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Véhicule automobile (1) comprenant au moins un support de roue portant une roue (4), un châssis (5) mobile par rapport audit support de roue, un capteur de vitesse (6) fixe par rapport audit support de roue et apte à émettre un signal de vitesse représentatif de la vitesse de rotation de ladite roue, et un capteur d'accélération (7, 107) apte à émettre un signal d'accélération représentatif d'une accélération subie par ledit capteur d'accélération, **caractérisé par le fait que** ledit capteur d'accélération est fixe par rapport audit support de roue.

2. Véhicule selon la revendication 1, **caractérisé par le fait qu'**il comprend un support de fixation (8) fixé sur ledit support de roue, ledit capteur de vitesse et ledit capteur d'accélération (7) étant fixé sur ledit support de fixation.

3. Véhicule selon la revendication 1, **caractérisé par le fait qu'**il comprend un premier connecteur (121) relié audit capteur de vitesse pour l'émission dudit signal de vitesse, ledit capteur d'accélération (107) comprenant un deuxième connecteur (122) et un troisième connecteur (123), ledit premier connecteur coopérant avec ledit deuxième connecteur pour fixer de manière amovible ledit capteur d'accélération audit premier connecteur, ledit capteur d'accélération étant apte à transmettre ledit signal de vitesse dudit deuxième connecteur vers ledit troisième connecteur pour l'émission dudit signal de vitesse et dudit signal d'accélération par ledit troisième connecteur.

4. Véhicule selon l'une des revendications 1 à 3, **caractérisé par le fait que** ledit capteur d'accélération est un capteur d'accélération unidirectionnel, ledit signal d'accélération étant représentatif d'une accélération subie par ledit capteur d'accélération selon une direction prédéfinie (17).

5. Véhicule selon la revendication 4, **caractérisé par le fait que** ledit capteur d'accélération est agencé de manière que ladite direction prédéfinie est alignée avec la direction longitudinale dudit véhicule.

6. Véhicule selon l'une des revendications 1 à 5, **caractérisé par le fait que** ledit capteur d'accélération comprend au moins une paroi (131) et une masse (130) élastiquement mobile par rapport à ladite paroi, ledit signal d'accélération étant un signal représentatif du déplacement de ladite masse par rapport à ladite paroi.

7. Véhicule selon l'une des revendications 1 à 6, **caractérisé par le fait qu'**il comprend au moins un premier capteur de vitesse et un premier capteur d'accélération fixes par rapport à un premier support de roue, et un deuxième capteur de vitesse et un deuxième capteur d'accélération fixes par rapport à un deuxième support de roue.

8. Procédé d'estimation d'un paramètre de fonctionnement d'un véhicule automobile selon l'une des revendications 1 à 7, comportant les étapes consistant à :
- mesurer l'accélération dudit support de roue avec ledit capteur d'accélération,
- calculer ledit paramètre de fonctionnement en fonction de ladite accélération mesurée.

9. Procédé selon la revendication 8, **caractérisé par le fait que** ledit paramètre de fonctionnement est la pente ou l'état défoncé d'une surface sur laquelle se trouve ledit véhicule.

10. Organe de mesure (15, 115) adapté pour un véhicule selon l'une des revendications 1 à 7, **caractérisé par le fait qu'**il comprend un capteur de vitesse (6) apte à émettre un signal de vitesse représentatif de la vitesse de rotation de ladite roue et un capteur d'accélération (7, 107) fixe par rapport audit capteur de vitesse et apte à émettre un signal d'accélération représentatif d'une accélération subie par ledit capteur d'accélération, ledit capteur de vitesse et ledit capteur d'accélération étant aptes à être fixés sur ledit support de roue.
